# EUROPEAN PATENT APPLICATION

(11) **EP 4 190 167 A1**
(43) Date of publication of application: **07.06.2023**
(21) Application number: 21306686.3
(22) Date of filing: 01.12.2021
(51) Int. Cl.: A23J 3/14, A23J 3/22, A23L 19/00, A23L 33/185, A23P 30/00

(54) **PROCESS FOR PRODUCING A PLANT BASED FOOD PRODUCT**

(71) Applicant: ROQUETTE FRERES, 62136 Lestrem (FR)
(72) Inventor: WONG, Zachary, 138667 SINGAPORE (SG)
(74) Representative: Plasseraud IP

(57) **Abstract**

The invention is directed to a process of producing a plant based food product comprising the combination of at least one textured vegetal protein and at least one vegetal protein isolate in a weight ratio of textured vegetal protein / vegetal protein isolate comprised between 40/60 and 80/20, preferably comprised between 40/60 and 60/40, as well as to a corresponding food product.

## Description

### Background Art

Consumption of proteins from vegetable or plant in food products has been increasing over the years. Plant proteins are now widely used e.g. in dairy, baking, confectionary or even meat analog industries. Some food categories like milk, cheese or ground beef meat have now a multitude of plant-based analogs that mimic closely

But some food products are still very far in terms of texture from original products, and it is clearly the case of products like fruit leather and jerky.

Fruit leather can be defined as a sweet food made from fruit that has been crushed and then spread out, dried, and cut into strips. Jerky or Meat jerky can be defined as meat that has been cut into long, thin strips and dried. They both are dried foods in a rubber shape that can easily been consumed.

Fruit leather is already a plant-based food as it is mainly, even totally, based on fruit like strawberry or apricot. On another side, its composition is very poor in protein which makes it not as nutritious as it can be seeked by consumers.

US20200288733 tried to propose a process that raise protein content in a fruit/legume dried food product with a jerky-like texture. It consists of marinating fruit/legume with a marinade made of protein and sugar before drying fruit. This solution has two drawbacks. The first is that sugar is not a compound that consumer wants to find in excess in a fruit leather. The second is that protein with low molecular weight must be used: Table 2 clearly show that when pea protein with molecular weight above 150 KDa is used in the marinade, end product only reach 10% proteins whereas other proteins like whey (which have a lower molecular weight) are above 14%. There's a need to improve such solution and obtain an easier way to obtain fruit leather that contains more than 10% proteins.

Jerky is not plant-based as in its original recipe it is mainly based on meat. Driven by consumer appeal, it already exists plant-based jerky recipes. But as disclosed in WO2019/143859, they involve high moisture extrusion which requires extensive knowledge in the field of extrusion.

There is still a need to provide plant-based fruit leathers/jerky with a texture close to the original product, a high protein content and produce with an easy process.

### General description of Invention

In a first aspect, the invention relates to a process for producing plant based food comprising the steps of :
1. Preparing a composition comprising vegetal protein, comprising:
   a. preparing a blend comprising at least one textured vegetal protein and at least one vegetal protein isolate in a weight ratio of textured vegetal protein / vegetal protein isolate comprised between 40/60 and 80/20, preferably comprised between 40/60 and 60/40;
   b. adding at least one carbohydrate and at least one additive to the blend obtained in step 1a;
      wherein water is added in step 1a and/or step 1b, and
      wherein the textured vegetal protein and the vegetal protein isolate together represent between 15% and 25% by weight of the total weight of the composition comprising vegetal protein, preferably between 17% and 23% by weight of the total weight of the composition comprising vegetal protein, and
      the the composition comprising vegetal protein has a water content between 0.5% and 30% by weight;
2. mixing the composition comprising vegetal protein in order to obtain a homogeneous paste
3. spreading the paste in a layer shape having a thickness between 1.0 and 2.0 mm, preferably 1.5 mm
4. drying the paste to obtain an end product having a water activity comprised between 0.3 and 0.6, preferably between 0.4 and 0.5

In a second aspect, the invention relates to a food product obtainable by a process as described in the first embodiment.

The invention will be better understood in the following detailed description of the invention chapter.

### Detailed description of the invention

In a first aspect, this invention relates to a process of producing a plant based food product comprising the steps of :
1. Preparing a composition comprising vegetal protein, comprising:
   a. preparing a blend comprising at least one textured vegetal protein and at least one vegetal protein isolate in a weight ratio of textured vegetal protein / vegetal protein isolate comprised between 40/60 and 80/20, preferably comprised between 40/60 and 60/40;
   b. adding at least one carbohydrate and at least one additive to the blend obtained in step 1a;
      wherein water is added in step 1a and/or step 1b, and
      wherein the textured vegetal protein and the vegetal protein isolate together represent between 15% and 25% by weight of the total weight of the composition comprising vegetal protein, preferably between 17% and 23% by weight of the total weight of the composition comprising vegetal protein, and
      the composition comprising vegetal protein has a water content between 0.5% and 30% by weight;
2. mixing the composition comprising vegetal protein in order to obtain homogeneous paste;
3. spreading the paste in a layer having a thickness between 1.0 and 2.0 mm, preferably 1.5 mm
4. drying the paste to obtain an end product having a water activity comprised between 0.3 and 0.6, preferably between 0.4 and 0.5.

In the present application, "plant based" means essentially free of ingredients of animal origin. Preferably, "essentially free" means containing less than 5% on dry matter, more preferably less than 1% by weight on dry matter, even more preferably less 0.1 % of any ingredient of animal origin, added voluntarily. Even more preferably, the plant based product according to the invention or produced according to the invention is free of any ingredient of animal origin. Within the context of the invention, this means that no ingredient(s) of animal origin are actively added during preparation. However, this does not exclude that some cross-contamination can occur, e.g. in a plant that produces vegan as well as dairy or meat products.

In step 1a of the process of the invention a blend composition comprising at least one textured vegetal protein and at least one vegetal protein isolate in a ratio comprised between 40/60 and 80/20, preferably comprised between 40/60 and 60/40 is prepared.

In the present application, the term "vegetal protein" designates a protein composition extracted from a vegetal source. Such a protein composition generally does not contain pure protein, i.e. molecules, consisting of one or more long chains of amino-acid residues, but also contains other components that are extracted along with the protein, such as e.g. fibers or starch. Accordingly, vegetal proteins within the meaning of the present application may have different protein contents. They include in particular protein isolates having a protein content of above 80% by dry weight on dry matter, preferably between 80% and 90%, and protein concentrates having a protein content of between 50% and 80% by dry weight on dry matter. In this application, protein isolates having a protein content above 80% by dry weight on dry matter are particularly preferred. The vegetal protein may be in its native form or in a modified form, including hydrolyzed protein.

Any vegetal protein sources may be used in the context of the invention but pulse proteins are preferred. Preferred pulse proteins exclude soy protein. More preferred pulse proteins are pea and fava bean proteins, more preferably pea protein.

In the present application, the term "pea" must be considered in its broadest meaning. In particular, it includes all varieties of "smooth pea" and of "wrinkled pea", and all mutant varieties of "smooth pea" and of "wrinkled pea». These varieties relate to the uses that are usually intended for each pea type (food for human consumption, animal feed and/or other uses). In the present application, the term "pea" includes the varieties of pea belonging to the Pisum genus and more particularly to the sativum and aestivum species. Said mutant varieties are in particular those known as "r mutants", "rb mutants", "rug 3 mutants", "rug 4 mutants", "rug 5 mutants" and "lam mutants" as described in the article by C-L HEYDLEY et al. entitled "Developing novel pea starches", Proceedings of the Symposium of the Industrial Biochemistry and Biotechnology Group of the Biochemical Society, 1996, pp. 77-87.

Even if pea source is the most preferred embodiment, some plants of the pea family (Leguminosae) can be also be encompassed under denomination of "pea". These have seeds in pods, distinctive flowers, and typically root nodules. These nodules contain symbiotic bacteria that are able to fix nitrogen.

In the present application, the at least one "vegetal protein isolate" used in step 1a has a protein content of 80% or more by dry weight based on dry matter, preferably 85 % or more by dry weight based on dry matter, more preferably between 80% and 90% by dry weight based on dry matter. The protein content is determined based on the total nitrogen, which is preferably determined by using the Kjeldahl assay method, estimating the protein content assessing the weight of total nitrogen multiplied by 6.25 e.g. following ISO 1634-1:2018. In a preferred embodiment, the vegetal protein isolate is a pulse protein isolate, preferably excluding soy protein isolate, more preferably selected from pea and fava bean protein isolates, even more preferably selected from pea protein isolates.

In the present application, the expression "textured vegetal protein" (TVP) means a composition containing mainly vegetal protein as defined above in which fiber-like structures are generated. The textured vegetal protein may comprise additional ingredients such as e.g. as fibers and/or flour, in the case of pulse protein, especially pulse fibers and/or pulse flour, preferably excluding soy fibers and/or soy flour. More preferably, the fibers and/or flour are selected from faba bean fibers and pea fibers and/or faba bean flour and pea flour, even more preferably from pea fibers and/or pea flour. Any physical and/or chemical process aimed at modifying a composition containing proteins to give it a specific ordered structure will fit with this invention. In the context of the invention, texturization of proteins aims to give the appearance of a fiber, as in animal meat. Food extrusion is the preferred way to texture food composition containing proteins. It is a process by which a set of mixed ingredients, in the present invention vegetal protein and optionally other ingredients as defined above, are forced through an opening in a perforated plate or die with a design specific to the food and is then cut to a specified size by blades. By such extrusion process, vegetal protein, such as protein isolate or concentrate, can be transformed into textured vegetable protein (TVP) which can be used in the meat analog or baking industries. In this application, dry extrusion is preferred. Dry extrusion is defined by an extrusion made with a water content below 30% of total raw material in the extruder feed.

In a preferred embodiment, the textured vegetal protein is characterized in that its particles sizes are comprised from 0.2 cm to 1.5 cm. In a more preferred embodiment, the textured vegetal protein is characterized in that at least 85% of its particles have a size comprised from 0.2 cm to 0.5 cm. Such desired particle size distribution can be directly obtained or obtained by an additional process combining grinding and sieving of the textured vegetal protein. Any well -known apparatus can be used.

Textured vegetal protein can be used dry or pre-hydrated before being blended with protein isolate. Pre-hydration consists of allowing the textured vegetal protein to bind water before being used. Pre-hydration may be controlled, i.e. a precise weight of water is mixed with the textured vegetal protein until complete absorption, or it may be maximal, i.e. the textured vegetal protein is stored with an excessive amount of water and after a time previously defined, excess water is removed, e.g. using a sieving device.

In a preferred embodiment, the textured vegetal protein composition has a protein content between 65% and 80% by dry weight based on dry matter, preferably between 65% and 75% by dry weight based on dry matter, in particular about 70% by dry weight based on dry matter.

In a preferred embodiment, the textured vegetal protein is a textured pulse protein, preferably excluding textured soy proteins, more preferably selected from textured pea proteins and textured fava bean proteins, even more preferably from textured pea proteins.

In step 1a of the process of the invention, the at least one textured vegetal protein and the at least one vegetal protein isolate are blended in a weight ratio textured vegetal protein / vegetal protein isolate comprised between 40/60 and 80/20, preferably comprised between 40/60 and 60/40. Such ratio must be understood as a relative amount between the two compounds. In order to better illustrate, a weight ratio of textured vegetal protein / vegetal protein isolate 50/50 must be understood as a mix of equal amounts of textured vegetal protein and vegetal protein isolate.

In step 1b of the process according to the invention, at least one carbohydrate and at least one additive are added. The at least one carbohydrate may be selected from sucrose, glucose syrup, fructose syrup, glucose/fructose syrup, starches, and polyols. Examples of starches include pregelatinized starches. Examples of polyols include sorbitol, maltitol, and xylitol, preferably sorbitol. Preferably, more than one carbohydrate is added in step 1b. In a particular embodiment, the at least one carbohydrate comprises sucrose, starch, sorbitol, glucose syrup, and optionally glucose/fructose syrup, the starch being preferably a pregelatinized starch, more preferably pregelatinized waxy corn starch. The carbohydrates added in step 1b may be limited to sucrose, starch, sorbitol, glucose syrup, and optionally glucose/fructose syrup, the starch being preferably a pregelatinized starch, more preferably pregelatinized waxy corn starch.

In the present application, the terms "sucrose", "saccharose", and "sugar" are used as synonyms. They designate a disaccharide made up of glucose and fructose bound together, having C₁₂H₂₂O₁₁ as molecular formula.

In the present application, the term "glucose syrup" must be understood as a syrup containing glucose that is obtained via hydrolysis of starch. Preferably, its dextrose equivalent or DE is above 20, more preferably between 20 and 80, even more preferably between 40 and 60. Hydrolysis can be obtained by chemical, enzymatical or biological means.

In the present application, the term "polyols" (also known as sugar alcohols, or polyhydric alcohols, polyalcohols, alditols or glycitols) must be understood as chemical compounds typically derived from sugars, containing one hydroxyl group (-OH) attached to each carbon atom. They can occur naturally or be produced industrially by hydrogenation of sugars. Examples of polyols include but are not limited to sorbitol, maltitol, xylitol. A preferred polyol in the context of the invention is sorbitol.

The at least one additive added in step 1b can be any food ingredient known in the food industry, especially the ones dedicated to mimic composition and aspect of conventional fruit leather and/or meat jerky. Thus, useful additives include but are not limited to fruit puree, vegetal oils, organic acids, flavors, herbs, spices, seasoning sauces, sodium chloride, preservatives, and colorants. "Fruit puree" within the meaning of the invention means a paste or a liquid obtained from a single fruit variety or a mixture of different fruit varieties by cooking, grinding, pressing, blending and/or sieving. Examples of vegetal oils include but are not limited to sunflower oil, rapeseed oil, and olive oil, sunflower oil being preferred. Examples of organic acids include but are not limited to citric acid, lactic acid, and succinic acid, citric acid being preferred. Depending on the nature of acid, it may be added in powder form or as an aqueous solution. An example of seasoning sauces is soy sauce. Preferably, more than one additive is added in step 1b. In one embodiment, the at least one additive comprises fruit puree and optionally one or more other additives, which may in particular be selected from organic acids, flavors, and colorants. In another embodiment, the at least one additive comprises a seasoning sauce and optionally one or more other additives, which may in particular be selected from vegetal oils, organic acids, spices, herbs, sodium chloride, flavors, and colorants.

The process according to the invention also comprises adding water in step 1a and/or step 1b. Water may be added as such, e.g. tap water or as vehicle of a carbohydrate or an additive. It may e.g. be added with a polyol in the form of a polyol syrup or in the form of an acid solution, such as a citric acid solution.

The composition comprising vegetal protein obtained in step 1 of the process according to the invention has a water content between 0.5% and 30% by weight, preferably between .1% and 20%% by weight, more preferably between 2% and 10%.

The textured vegetal protein and the vegetal protein isolate together represent between 15% and 25%, preferably between 17% and 23% by weight of the total weight of the composition comprising vegetal protein obtained in step 1.

In a particular embodiment, the following carbohydrates are added in step 1b of the process according to the invention:
- between 25% and 35% of saccharose
- between 15% and 25% of glucose syrup, preferably characterized by a dextrose equivalent of 60 (+/- 5) and dry content of 80% (+/- 5%)
- between 5% and 15% of sorbitol syrup, preferably characterized by a sorbitol content of 70% (+/- 5%) and dry content of 70% (+/- 5%)
- between 2% and 4% of starch, preferably pregelatinized starch,
the percentages of the carbohydrates being expressed by weight with respect to the total weight of the composition comprising vegetal protein obtained in step 1 of the process of the invention.

In one variant of the invention, the food product is a fruit leather. In this case, the at least one additive comprises fruit puree. Advantageously, the at least one additive also comprises an organic acid, such as citric acid and optionally one or more other additives selected from colorants and flavors. For example, the following additives may be added in step 1b, in particular together with the carbohydrates recited in the preceding paragraph:
- between 10% and 20% of fruit puree,
- between 1% and 3% of a 55% citric acid solution in water,
the percentages of the additives being expressed by weight with respect to the total weight of the composition comprising vegetal protein obtained in step 1 of the process of the invention.

In another variant of the invention, the food product is a meat jerky. In this case, the at least one additive comprises a seasoning sauce, such as soy sauce. Advantageously, the at least one additive also comprises a vegetal oil and optionally one or more other additives selected from sodium chloride, spices, herbs, flavors, and colorants. For example, the following additives may be added in step 1b, in particular together with the carbohydrates recited two paragraphs above:
- between 4% and 8.% of soy sauce, preferably between 6% and 7%;
- between 3% and 7% vegetal oil, preferably between 4% and 6%;
the percentages of the additives being expressed by weight with respect to the total weight of the composition comprising vegetal protein obtained in step 1 of the process of the invention.

In step 2 of the process according to the invention all ingredients are mixed in order to obtain a homogeneous paste. By "homogeneous", it must be understood that after mixing the paste obtained is isotropic, meaning that the composition and the texture of the paste are macroscopically identic wherever a sample is taken in the paste. In order to achieve homogeneous mixing, the person skilled in the art will use well known mixing equipment, such as e.g. including planetary mixers. Suitable planetary mixers are e.g. commercialized by Hobart (USA).

In step 3 of the process according to the invention the paste is spread in a layer having between 1.0 and 2.0 mm, preferably 1.5 mm. This skilled person will use well known spreading techniques, using e.g. a spatula, baking plate, baking paper.

In step 4 of the process according to the invention the spread paste is dried to obtain an end product having a water activity comprised between 0.3 and 0.6, preferably between 0.4 and 0.5. Any well-known apparatus for drying food products can be used, including ovens. In a second aspect, the invention relates to a food product obtainable by a process as described in the first embodiment.

The invention will be better understood in light of the following figures and examples.

Description of the drawings:
- Figure 1 shows a plant based fruit leather made only with protein isolate.
- Figure 2 shows a plant based fruit leather made only with textured vegetal protein.

### Examples

### Example 1: Fruit leather general recipe

Two different recipes were tested, the composition of which is summarized in the table below

| | | | Type of recipes | |
|---|---|---|---|---|
| Quantity expressed in % of final product | | | 100% TVP | 100% Isolate |
| Blend 1 | Textured Vegetal protein | | 19.934 | |
| | Vegetal protein isolate | | | 19.934 |
| Blend 2 | Strawberry puree | | 14.933 | |
| | Glucose syrup 6080 | Roquette | 19.233 | |
| | Neosorb 70/70 sorbitol syrup | Roquette | 9 | |
| Blend 3 | Pregeflo C100 starch, pregelatinized waxy maize starch | Roquette | 3 | |
| | Sugar | | 30.5 | |
| Blend 4 | Citric acid solution 55% in water | | 1.9 | |
| | Strawberry flavor | | 1 | |
| | Red colorant | | 0.5 | |

Textured Vegetal proteins (TVP) are :
- Nutralys^{®} TP70S from Roquette
- Nutralys^{®} TP70G from Roquette

Vegetal protein isolates are :
- Nutralys^{®} S85F
- Nutralys^{®} S85M
- Nutralys^{®} F85F
- Nutralys^{®} F85M
- Nutralys^{®} F85G
- Nutralys^{®} S85plusN
- Nutralys^{®} S85plusD,

They all have a protein content of about 85% by dry weight on dry matter.

The process to obtain a fruit leather with the recipes above is summarized below :
- Weigh separately ingredients of Blend 1 in a plastic bag, mix by shaking 5 times and add into a Hobart N50 planetary mixer
- Weigh ingredients of Blend 2 into Hobart mixing bowl
- Blend for 3 min at speed 1
- Introduce ingredients of Blend 3 into the Hobart mixing bowl while mixing at speed 1
- Blend for 8 min at speed 1
- Introduce ingredients of Blend 4 into the Hobart mixing bowl while mixing at speed 1
- Blend for 3 min at speed 1
- Spread paste obtained on wax paper to obtain a 1.5mm thickness
- Dry in an oven dryer to reach 3.5% water, corresponding to 0.52 Aw
- Coat with 7% citric acid powder

The different fruit leathers were analyzed as follows :
- Stickiness of the paste obtained before drying
   ∘ The product was touched with fingers and stickiness was ranked
   ∘ +++ very sticky / ++ average sticky / + slightly sticky / - not sticky
- Smoothness of the paste before drying
   ∘ Product was visually observed and smoothines ranked
   ∘ +++ homogeneous and very smooth / ++ less homogeneous and smooth / + not homogeneous and smooth / - not smooth
- Pea taste
   ∘ Fruit leather were eaten and pea tatse was ranked
   ∘ +++ strong pea taste / ++ average pea taste / + low pea taste

The results are summarized in the Table 1 below:

**Table1**

| | Stickiness | Smoothness | Pea taste |
|---|---|---|---|
| Nutralys^{®} T70S | + | - | + |
| Nutralys^{®} TP70G | + | - | + |
| Nutralys^{®} F85F | ++ | ++ | ++ |
| Nutralys^{®} F85M | ++ | ++ | ++ |
| Nutralys^{®} F85G | ++ | ++ | ++ |
| Nutralys^{®} S85+D | +++ | +++ | N.A |
| Nutralys^{®} S85+N | +++ | +++ | N.A |
| Nutralys^{®} S85M | +++ | +++ | +++ |
| Nutralys^{®} S85F | +++ | +++ | +++ |
| Nutralys^{®} S85XF | +++ | +++ | +++ |

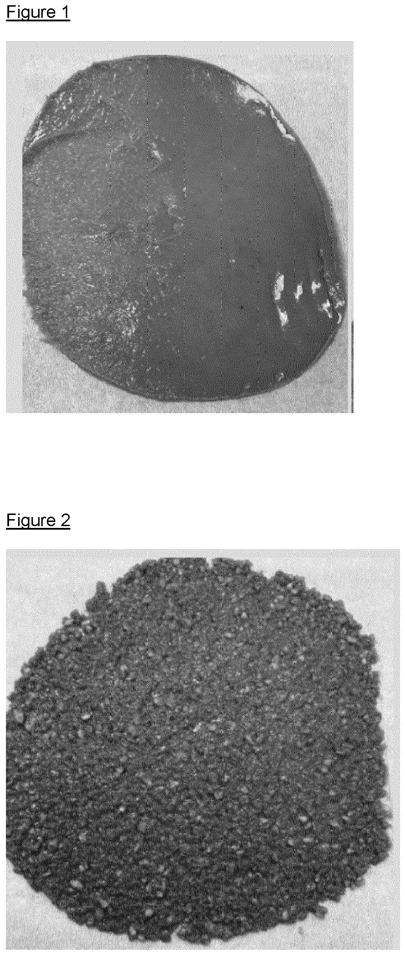

Fruit leathers made only with pea protein isolate are smooth but very sticky, making them very hard to handle during production, packaging and/or storage (see Figure 1 as example corresponding to F85M use)

Fruit leathers made only with textured vegetal protein are less sticky but they bring a non-homogeneous texture (see Figure 2 as example corresponding to T70G use)

### Example 2 : Fruit leather obtained with blend of protein isolate and textured vegetal protein

The recipes of Table 1 were modified as indicated below :

| | | | Type of recipes | | | |
|---|---|---|---|---|---|---|
| Quantity expressed in % of final product | | | 20/80 | 40/60 | 60/40 | 80/20 |
| Blend 1 | Textured Vegetal protein | | 3.986 8 | 7.973 6 | 11.96 04 | 15.94 72 |
| | Vegetal protein isolate | | 15.94 72 | 11.96 04 | 7.973 6 | 3.986 8 |
| Blend 2 | Strawberry puree | | 14.933 | | | |
| | Glucose syrup 6080 | Roquet te | 19.233 | | | |
| | Neosorb 70/70 sorbitol syrup | Roquet te | 9 | | | |
| Blend 3 | Pregeflo C100 starch - pregelatinized waxy maize starch | Roquet te | 3 | | | |
| | Sugar | | 30.5 | | | |
| Blend 4 | Citric acid solution 55% in water | | 1.9 | | | |
| | Strawberry flavor | | 1 | | | |
| | Red colorant | | 0.5 | | | |

The textured vegetal protein used is Nutralys^{®} TP70G and the vegetal protein isolate is Nutralys^{®} F85G.

The fruit leathers were analysed as those of Example 1 (stickiness, smoothness and pea taste)

| | Stickiness | Smoothness | Pea taste |
|---|---|---|---|
| 20/80 | +++ | +++ | +++ |
| 40/60 | + | ++ | ++ |
| 60/40 | + | ++ | ++ |
| 80/20 | + | - | + |

It can be seen that when the weight ratio between textured vegetal protein and vegetal protein isolate is between 40/60 and 60/40, a fruit leather that is slightly sticky and smooth is obtained.

### Example 4 : Plant based bakwa (Chinese jerky) made according to the invention

Ingredients and their required quantities were

| NUTRALYS T70S (textured vegetal protein) | Roquette | 16.32 |
|---|---|---|
| Water | | 26.1 |
| Soy sauce (light) | | 6.5 |
| Glucose Syrup 6080 | Roquette | 10.25 |
| Glucose/Fructose syrup 7081 | Roquette | 4.05 |
| Neosorb 70/70 sorbitol syrup | Roquette | 4.1 |
| Sunflower oil | | 5.2 |
| Sucrose | | 19.04 |
| PREGEFLO^{®} C100 pregelatinized waxy maize starch | Roquette | 2.4 |
| Sodium chloride | | 0.4 |
| NUTRALYS F85M (pea protein isolate) | Roquette | 4.1 |
| FD&C Red 40 solution | Sensient | 0.7 |
| Five spice powder | Redman | 0.2 |
| Springarom SM7007/30-PW | Biospringer | 0.5 |
| Bacon flavor P-445653 | Givaudan | 0.14 |
| Total | | 100 |

The procedure to obtain plant based bakwa was the following
- Hydrate textured vegetal protein (TVP) in water and soy sauce for at least 30mins
- Shred hydrated TVP in Hotmix at speed 4 (1800rpm) for 1.5mins, scrapping down every 30s
- Blend all dry ingredients together and set aside
- Weigh all syrups and colorant into Hobart bowl. Mix well and add oil while manually stirring
- Add hydrated TVP into Hobart bowl and blend for 3mins (speed 1)
- While mixing, add rest of the powdered ingredients slowly into the bowl
- Blend for 8mins (speed 1). Scrape down at 4 mins
- Weigh 250-400g of mix on baking paper and roll out to 5.0mm thickness using a Rondo sheeter
- Dry at 80C at fan speed 1 for 3 hours in an oven
- Flip and dry for another 30mins

Brush with additional sunflower oil and torch

## Claims

1. A process for producing a plant based food product comprising the steps of :
1. preparing a composition comprising vegetal protein, comprising:
a. preparing a blend comprising at least one textured vegetal protein and at least one vegetal protein isolate in a weight ratio textured vegetal protein/ vegetal protein isolate comprised between 40/60 and 80/20, preferably comprised between 40/60 and 60/40;
b. adding at least one carbohydrate and at least one additive to the blend obtained in step 1a;
wherein water is added in step 1a and/or step 1b, and
wherein the textured vegetal protein and the vegetal protein isolate together represent between 15% and 25% by weight of the total weight of the composition comprising vegetal protein, preferably between 17% and 23% by weight of the total weight of the composition comprising vegetal protein, and the composition comprising vegetal protein has a water content between 0.5 and 30% by weight;
2. mixing the composition comprising vegetal protein in order to obtain a homogeneous paste;
3. spreading the paste in a layer having a thickness between 1.0 and 2.0 mm, preferably about 1.5 mm
4. drying the paste to obtain an end product having a water activity comprised between 0.3 and 0.6, preferably between 0.4 and 0.5.

2. The process of claim 1, wherein the textured vegetal protein is selected from textured pulse proteins, preferably from textured pea and fava bean proteins, more preferably from textured pea proteins.

3. The process of claim 1 or 2, wherein the vegetal protein isolate is selected from pulses protein isolates, preferably from pea and fava bean protein isolates, more preferably from pea protein isolates.

4. The process of any of claims 1 to 3, wherein the textured vegetal the particles of the textured vegetal protein have particle sizes comprised between 0.2 cm and 1.5 cm.

5. The process of any of claims 1 to 4, wherein of the textured vegetal protein composition has a protein content between 65% and 80% by weight, preferably between 65% and 75% by weight.

6. The process of any of claims 1 to 5 **characterized in that** the at least one carbohydrate added in step 1b is selected from sucrose, glucose syrup, fructose syrup, starches, and polyols.

7. The process of claim 6, wherein the at least one additive is selected from fruit puree, organic acids, flavors, and colorants

8. The process of any of claim 1 to 7, wherein the following carbohydrates are added in step 1b:
- between 25% and 35% of saccharose,
- between 15% and 25% of glucose syrup, preferably **characterized by** a dextrose equivalent of 60 (+/- 5) and a dry matter content of 80% (+/- 5 %),
- between 5% and 15% of sorbitol syrup, preferably **characterized by** a sorbitol content of 70% by weight (+/- 5 %) and a dry matter content of 70% (+/- 5),
- between 2% and 4% of starch, preferably pregelatinized starch, the percentages of the carbohydrates being expressed by weight with respect to the total weight of the composition comprising vegetal protein.

9. The process according to any of claims 1 to 8, wherein the following additives are added in step 1b:
- between 10% and 20% of fruit puree,
- between 1% and 3% of a 55% citric acid solution in water,
the percentages of the additives being expressed by weight with respect to the total weight of the composition comprising vegetal protein.

10. The process according to any of claims 1 to 8, wherein the following additives are added in step 1b:
- between 4% and 8% of soy sauce, preferably between 6% and 7%;
- between 3.% and 7% vegetal oil, preferably between 4% and 6%;
the percentages of the additives being expressed by weight with respect to the total weight of the composition comprising vegetal protein.

11. A food product obtainable by a process as described in any of claims 1 to 10.
